# EUROPEAN PATENT SPECIFICATION

(11) **EP 1 479 455 B1**
(45) Date of publication and mention of the grant of the patent: **16.03.2016**
(21) Application number: 04011839.0
(22) Date of filing: 19.05.2004
(51) Int. Cl.: B09B 3/00, B03B 9/06, F01K 3/18, F23G 5/46, F23G 5/00, F22B 31/04, F23G 5/027, F23G 7/06

(54) **Combined plant and process for obtaining electrical energy from municipal solid waste**
Kombiniertes Kraftwerk und Verfahren zur Erzeugung elektrischer Energie aus Siedlungsabfall
Centrale et procédé combinés pour obtenir de l'énergie électrique a partir de déchets domestiques

(30) Priority: 20.05.2003 IT MI20031002
(43) Date of publication of application: 24.11.2004
(73) Proprietor: A2A Ambiente S.P.A., 25124 Brescia (IT)
(72) Inventor: Natta, Giuseppe, 27010 Giussago (PV) (IT); Donati, Gianni, 27010 Giussago (PV) (IT)
(74) Representative: Bottero, Claudio

(56) References cited:
- EP-A- 0 687 862
- EP-A- 0 767 343
- WO-A-98/26215
- US-A- 5 707 490
- US-A1- 2001 032 468
- US-A1- 2003 110 994

## Description

### DESCRIPTION OF THE INVENTION

The present invention relates to a process and a plant for obtaining electrical energy from the combustion of municipal solid waste (MSW) or a fraction thereof produced by selective collection, the biomasses resulting from farming or fuels derived therefrom are considered as waste.

The known processes and existing plants for obtaining electrical energy from waste broadly reflect the prior art of processes for the production of electrical energy from fossil fuels.

Additionally they have considerable technological restrictions and variants linked to the special nature of the waste or the fuels derived therefrom.

The waste, specifically MSW, usually has, compared to fossil fuels:
- a reduced low heat value, usually around 9000 kJ/kg;
- a high content of ash and moisture, between 30 and 40%;
- a content of pollutants and corrosive substances and above all of chlorine;
- more complex logistics and feeding to the combustion plant;
- highly variable structural and composition features.

In order to overcome some of these disadvantages, processes have been developed for converting waste into derived fuels, Among the most common processes mention is made of those patented by the Applicant (EP 0 706 839 B1, EP 1.386.675) which enable production from approximately 100 kg of MSW through aerobic digestion in closed spaces of:
- 50 kg of secondary fuel (SF) with a low heat value of approximately 17000 kJ /keg;
- 25 kg of evaporated water and products of digestion;
- 25 kg of residual metals and fines separated after digestion.

In this way the original waste is concentrated approximately four times and a homogeneous and stable fuel is obtained, easier to transport and to feed to combustors.

The problem of the pollutants still remains however, which means that the technologies used for combustion and for treatment of exhaust gasses are of a special type and subject to numerous restrictions due to the materials and to environmental regulations.

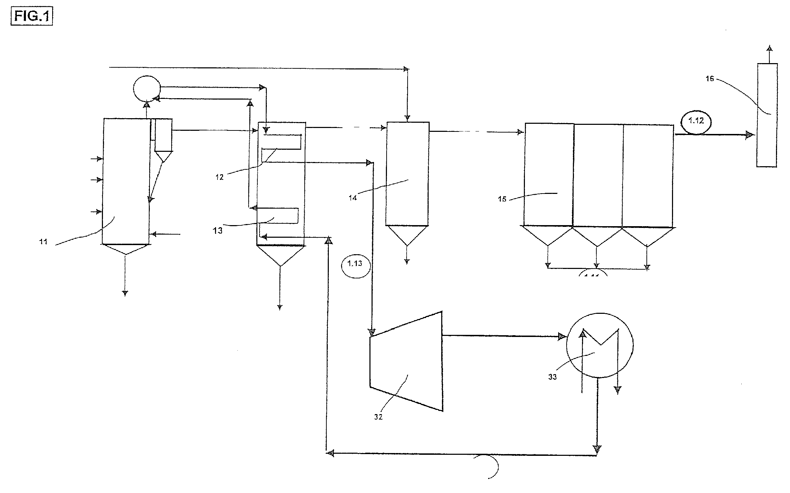

A typical plant suitable for the purpose is shown in Fig. 1 and is equipped with a combustor 11 with a steam generator, a superheater 12, an economiser (13) of a exhaust gasses treatment system for neutralisation of the acid substances produced by combustion and for adsorption of the organic residues 14, and a filtering system 15 for finishing treatment and elimination of the particulate before emission at the stack 16 in accordance with environmental restrictions.

The superheated steam produced is expanded in the turbine 32 for the generation of electrical energy in the alternator connected thereto, condensed in the condenser 33 and recycled to the economiser 13 and combustor 11.

The combustion system can be of the grid or rotary drum type with annexed afterburner and boiler, or of the boiling or recirculating fluidised bed type.

In the first two cases operations are carried out in the combustion chamber at higher temperatures, around 950°C, and usually systems are adopted for injection, upstream of the combustion or afterburning chamber, of bases for neutralising the acidity and ammonia for controlling the NOx (nitrous oxides).

In the case of fluidised beds, beds of sand and dolomite are used to control the combustion and acidity and operations are carried out at lower temperatures, around 850°C, to reduce the formation of the NOx.

The exhaust gasses treatment system can also be considerably complex in the case of production in the combustor of substances over the stack emission limits, such as NOx, chlorinated and polycyclic aromatic compounds, hydrochloric acid and sulphur oxides.

If the combustor is properly designed, dry treatment with soda or carbonate may be sufficient, with the addition of active carbons which complete their action on the filters where the particulate is eliminated.

The main disadvantage of the processes currently adopted is the low electrical energy yields which are around 25%.

The main reason for the low yields is the low temperature of the steam that can be generated in the boiler of the waste combustor which normally produces superheated steam at around 400°C and 40 bars with a consequent low enthalpy gradient in the steam turbine.

The low temperature of the steam produced (400°C) is a limit imposed by the resistance of the materials of the pipes of the boiler and above all of the superheaters to the corrosive atmosphere produced by the combustion of waste and in particular to the presence of hydrochloric acid and chlorine salts in the exhaust gasses.

By way of an example and referring to Fig. 1, we shall consider a combustion reactor of 7.5 t/h of SF having a low heat value of 16700 kJ/kg (4000 kcal/kg) and which discharges at the stack 89 t/h of purified gasses at 200°C and with an oxygen content of 8% in volume.

35 t/h of superheated steam are produced at 40 bars and 400°C which, expanded in the turbine, produce power of approximately 8 MW entirely from SF.

The efficiency of the thermodynamic cycle is 22% and specific consumption is around 1.1 kWh/kg of SF.

In order to overcome these disadvantages linked to the low yield, systems have been introduced which, instead of performing total combustion of the waste in oxygen, involve partial combustion without air to produce a lean gas with low heat value of around 4000 kJ/kg to be used as-is in utilities which tolerate high contents of ash and pollutants such as cement works, or to be purified to obtain a fuel which can be used in traditional energy production plants.

The gases produced leave the partial combustor, for example with a recirculating fluidised bed, at approximately 900°C and contain mainly N₂, CO and H₂ and a series of saturated and aromatic hydrocarbons, pitch and carbon, and entail a quantity of ash which has to be separated.

Purification of the gas represents a complex problem which has not yet been solved in economic terms.

Filtering must be performed at temperatures lower than 400°C and preferably around 200°C, and in these conditions the filters are clogged by the high-boiling hydrocarbons and pitch present.

Heat recovery from hot gas appears problematical due to the scaling of the surfaces. The loss of sensible heat in the ash appears considerable and of the order of 20%.

The separated solids contain around 10% carbon and pitch and must be treated in a combustor separately.

Washing and treatment of the hot gasses with possibly basic water at a low temperature solves the problems of the pitch but generates a suspension which has to be treated or incinerated.

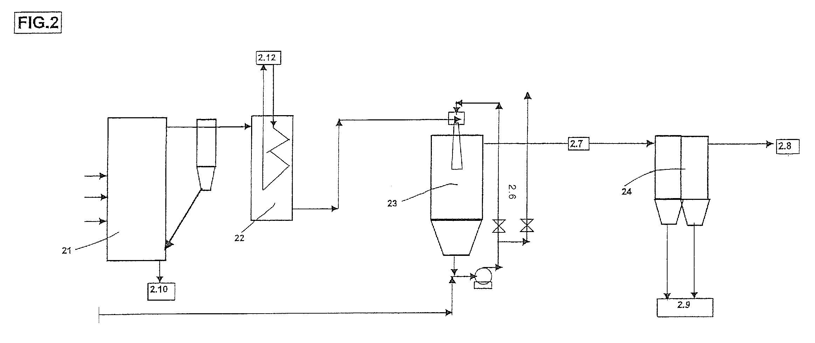

Referring to Fig. 2, a possible process diagram sees the production of the lean gas in the partial recirculating bed combustor 21, partial cooling of the gas in the exchanger 22, scrubbing at low temperature with basic water in a reactor 23 for example a Venturi scrubber to create a suspension of carbon ash and possibly a final treatment for elimination of the entrained solids and mists.

The lean gas 2.8 is sent to utilities, such as for example a traditional boiler of an electrical energy production plant, the suspended ash 2.9 has a high content of carbon and pitch and has to be incinerated and the heat recovered in the exchanger 22 can be used in the form of hot water or steam in other utilities.

The loss of energy in this operation may go over 20%: therefore the use of the purified lean gas produced in efficient thermodynamic cycles allows these losses to be recovered but not in such a way as to make this technology competitive compared to total combustion given the process complications and considerable plant costs.

The Applicant recently proposed (EP 1.382.806 etc.) the use of purified hot gasses and steam produced by the total combustion of waste in high efficiency electrical energy production plants.

In this way the whole energy content of the waste is transferred to a system with high thermodynamic efficiency and with overall yields for a SF with low heat value of 16700 kJ/kg, around 1.5 kWh/ kg of SF.

The increases in yield are improved by contributions linked to the use of renewable sources.

For isolated combustion plants not linked to the power plant, use is possible (EP 1.441.109) of a non-renewable energy source such as natural gas to raise the temperature of the steam produced and increase the thermodynamic efficiency of the Rankine cycle.

The consumption of natural gas, although improving yields, largely counterbalances the advantages in relation to plants that use waste alone.

US 2001/032468 A1 combines a reformer fed with a conventional fuel with a waste combustor and utilizes the reformed gas for a post combustion of a portion or of all the combustion gas of the waste combustor with the aim of reducing the pollutants and the NOx. The post combustion gasses are then used to superheat the steam to be sent to a turbine. As the combustion gas exiting the superheater are hot a modified scheme adds an economizer to preheat the water from the turbine.

EP -A-0767343 proposes the partial combustion of the waste: the gasses are first used for producing a saturated steam at 300°C and then are filtered at high temperature (450 - 650°C) and burned together to an auxiliary fuel to superheat the saturated steam. The superheated steam is sent to a turbine and the gas is sent to an economizer to preheat the water and then to preheat the air.

US 2003/0110994 A1 simply makes a biomass partial combustion to produce a reducing fuel to be fed to the post combustion zone of a biomass combustor with the scope of eliminating the Nox.

US-A-5707490 deals with an aqueous waste from a cellulose plant: the waste is partially evaporated and divided in two fractions, the first being fed to a combustor boiler to produce steam and a non filtered combustion gas, the second with a higher water content being used in partial combustor.

The fuel gas of the partial combustor is filtered and is sent to a combustor boiler to superheat the steam while the ash and the pitch of the filtration is treated in another auxiliary equipment.

EP -A-0687862 makes a partial combustion of the waste in a cyclone reactor that produces fused ashes and a fuel gas that is purified and burned in a combustor. The combusted gasses heat in an exchanger a stream of pressurized air that is sent to a gas turbine for the production of electric energy and then used for the combustion. The gasses exiting the exchanger are used for producing hot water or steam.

WO98/26215 A is regarded as the closest prior art and shows a process for combusting a fuel comprising a partial combustor where a a combustible gas is produced and a combustible rest product. The combustible gas is combusted and used in a gas turbine and the combustible rest product is burned in a second combustor and the combustion gases are processed by a second gas turbine.

### DESCRIPTION OF THE INVENTION

The object of the invention is that of overcoming the main disadvantages and limitations of the prior art and to enable the production of superheated steam at high temperature and therefore the achievement of high enthalpy gradients in the turbine with an increase in the production of energy and yields with the same quantity of waste consumed.

This object is achieved, according to the invention, with the features of the independent method claim 1 and the independent apparatus claim 7.

Advantageous embodiments are disclosed by the dependent claims.

Substantially the invention provides the combination of a large combustion plant 1 with a plant of reduced scale for gasification 2 thus allowing an increase in overall yields and a solution to all the problems linked to the purification and treatment of effluent of the gasification plant.

### BRIEF DESCRIPTION OF THE DRAWINGS

Further features of the invention will be made clearer by the following detailed description, relating to one of its embodiments purely by way of a non-limiting example, illustrated in the accompanying drawings, in which:
Figs. 1 and 2 illustrate diagrams of plants of the prior art as described previously, wherein references numerals, corresponding to those used in Fig. 3, have been inserted to facilitate understanding of the various connections;
Fig. 3 is a non-limiting example diagram of a plant illustrating the process according to the invention.

### DESCRIPTION OF A PREFERRED EMBODIMENT

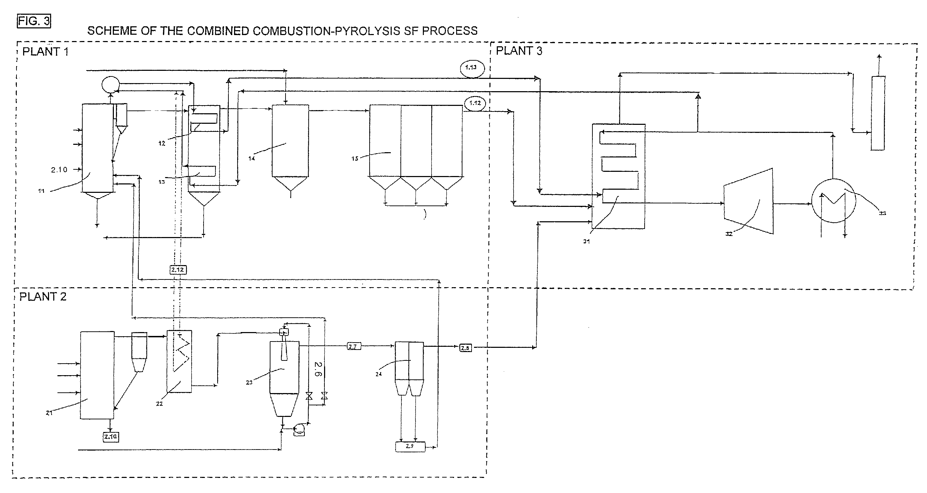

Referring to Fig. 3, the process according to the invention foresees:

### Plant 1

- combustion of the waste in a fluidised bed combustor 11 so as to produce saturated steam at temperatures preferably between 250°C and 400°C and pressures between 40 and 200 bars, and possible superheating of said steam in the superheater 12 and pre-heating recycle water in economizer 13. This combustor can usefully receive the ash and thermal waste produced in the plant 2 and to be eliminated.
- The gasses leave the combustor economizer at temperatures between 100 and 500°C and in any case at temperatures suitable for use during filtering: 200°C with commercial filters, 400°C with electrofilters or special filters of ceramic fibres.
- Neutralisation of the gasses in 14 in order to eliminate residual acidity.
- Filtering of the gasses in 15 so as to complete neutralisation of the gasses and eliminate the entrained solids.

### Plant 2

- Production in a partial waste combustor in 21, with reduced dimensions compared to the total combustor, of lean gas at approximately 900°C.
- Possible cooling of the lean gas in 22 at temperatures between 500 and 250°C and recovery of the hot fluids produced in the combustor 11 of the plant 1.
- Scrubbing of said lean gas or of a part thereof in a reactor 23 at low temperature and preferably at a temperature lower than 100°C. In said reactor most of the ash and pitch is eliminated and the residual acidity is neutralised, generating a concentrated suspension of solids 2.6.
- Recycling of said suspension of solids 2.6, having a low heat value, to the main combustor 11 of the Plant 1.
- Recycling to said combustor 11 of all the ash 2.10 and 2.9 which requires further treatment.
- Possible finishing in 24 of the cold lean gas 2.7 produced to give a lean gas 2.8 to be used as fuel.

### Plant 3

- Superheating of the steam 1.13 produced by the Plant 1 in a separate boiler 31 fed with hot combustion gasses 1.12, purified and still containing considerable quantities of oxygen produced by the Plant 1, using as energy source the lean gas 2.8 produced by the Plant 2. The temperature of adiabatic combustion is between 500 and 700°C and preferably around 600°C. The superheated steam produced has a pressure approximately equal to that of the original saturated steam 1.13 and a temperature above 400°C and between 450 and 700°C and preferably around 550°C. The boiler 31 superheats the saturated or superheated steam supplied thereto by the plant 1 and generates further superheated steam obtained from cooling of the gasses to the temperature of discharge at the stack, generally around 100 - 150°C.
- The use of steam in the turbine for the production of electrical energy.
- Recycling of the condensate produced by the condenser of the steam turbine, part to the waste combustor and part to the superheating boiler to generate other steam.

The examples show how, by operating according to the process of the present invention, approximately 1.3 - 1.4 kWh/kg of SF can be generated, to be compared with the 1.1 kWh/kg which can be obtained with the conventional process, without the need to use non-renewable energy sources.

Therefore the process of the present invention does not use NG to re-heat the steam produced by the SF combustor and improve the yields of the thermoelectric cycle, but instead uses the lean gas produced from SF in a plant of smaller scale.

This plant recovers all the effluent which would otherwise represent a problem in the SF partial combustion plant, gaining advantages on the yields.

The gasification plant can therefore operate in conditions and with technologies which would not be feasible in one plant alone.

Moreover the small scale of the gasification plant means that the losses of energy which in any case exist do not have a significant effect on the overall yields of the process of conversion of the SF into electrical energy.

### EXAMPLE 1

Referring to the diagram in Fig. 3 (Plant 1), from a fluidised bed reactor 11 for the combustion of 20 t/h of SF having a low heat value of 16700 kJ/kg, 230 t/h of gasses are obtained at a temperature of 200°C and with an oxygen content of 8% in volume and 110t/h of saturated steam which is superheated in the superheater 12 at 110 bars and 390°C.

The gas undergoes primary neutralisation in the fluidised bed of sand and dolomite, is further treated in a dry neutralisation tower 14 to eliminate the residual acidity, and is filtered with a conventional bag filter 15 to produce a completely purified gas.

In the partial combustor of the Plant 2, 11 t/h of SF are fed and 43 t/h of lean gas are produced at 930°C which is cooled to 304°C in the exchanger 22.

The exchanger 22 operates at the conditions of saturated steam leaving the combustor 11, is not soiled by the condensing pitch and recovers part of the sensible heat of the lean gas.

The lean gas is later cooled, scrubbed and neutralised with basic water in the reactor 23 wherefrom it leaves at 70°C and, after possible filtering in 24, is used in the plant 3.

The aqueous suspension of carbon ash and pitch is incinerated in the combustor 11 of the plant 1, together with any filtering residues.

The lean gas has a heat value of approximately 3000 kJ/kg and can be advantageously burnt in the boiler 31 using as comburent the combustion gas, still rich in oxygen, of the plant 1, so as to bring the adiabatic temperature of the gas to 579°C.

During this phase the traces of pollutants still present are destroyed and, due to the low oxygen content, possible NOx still present are reduced.

In the lower part of the boiler 31, above the flame, the superheaters present raise the temperature of the steam fed to 514°C while in the upper part the gasses, in a countercurrent with the recycled condensate, are cooled to 150°C, producing further saturated steam which combines with that coming from the combustor to be superheated.

A total of 145 t/h of superheated steam are produced by the boiler and are sent to the turbine where they generate approximately 41 MW, all from SF.

The specific production of SF is 1.32 kWh/Kg of SF and the yield is around 30% against values of 1.0-1.1 kWh/kg and 20-22% of the conventional plant.

In other words, with a plant which consumes 31 t/h of SF, approximately the same energy which can be obtained from an isolated combustion plant which consumes 37 - 40 t/h of SF is obtained.

The investments are also relatively reduced.

### EXAMPLE 2

Operations are performed in the plant 1 as in the previous case but the gasses leave the SF combustor 11 at 400°C.

The plant 2 is smaller than that of example 1 and consumes 5 t/h of SF.

In the plant 1 88 t/h of superheated steam are produced at 110 bars and 390°C, used in the boiler and superheated, and 216 t/h of flue gases.

The plant 2 produces 21 t/h of lean gas at 70°C and with low heat value of around 3000 kJ/kg.

This lean gas is burnt in the boiler 31 together with the combustion gasses of the plant 1 and the temperature is raised to 600°C.

The steam of the plant 1 is fed into the boiler 31 and 118 t/h of superheated steam are obtained at 536°C and 110 bars which, expanded in the turbine, generate 35 MW with thermodynamic efficiency of 30%.

The specific production of SF is 1.38 kWh/Kg of SF and close to that of the previous example.

This means that 25 t/h of SF in the combined system produce the same energy which can be obtained in a plant of combustion alone of 32 - 35 t/h of SF.

Compared to the prior art the new process therefore has:
- higher thermodynamic efficiency (30% as opposed to 22%);
- higher specific energy production, close to 1.35 kWh/kg SF, and reduced investments;
- the energy is produced completely from renewable sources without use in normal conditions of fossil fuels;
- a further advantage is obtained with the emissions of micropollutants and NOx in the environment thanks to the afterburning with hydrogen and carbon monoxide which reduce the NOx and destroy the residual traces of micropollutants.

## Claims

1. Combined process for obtaining electrical energy from the combustion of municipal solid waste (MSW) or a fraction thereof produced by selective collection, the biomass resulting from farming or fuel derived therefrom, considered as waste, with a combination of a combustion plant (1) and a gasification plant (2), wherein
- the combustion plant (1) burns the waste together with the ash and thermal waste generated by the gasification plant (2) in a fluidized bed combustor (11) which produces saturated steam, a filtered clean combustion gas, to be used as comburent in a boiler (31);
- the gasification plant (2) partially burns the waste and produces a lean gas at 900°C in a partial waste combustor (21) which is cooled to a temperature between 500°C and 250°C in a heat exchanger (22), scrubbed in a reactor (23) generating a concentrated suspension of solids which is recycled to the combustion plant (1) together with the ash which requires further treatment, and the cold lean gas is finished to give a clean gaseous fuel to be used for superheating the steam of the combined plant;
- the steam exiting the combustion plant is fed to a boiler (31) that bums the clean gaseous fuel produced by the gasification plant (2) and uses the oxygen and the waste heat of the filtered clean combustion plant (1) gas to produce a superheated steam to be fed to a turbine (32) for power generation.

2. Process according claim 1, wherein the saturated steam that is produced in the fluidized bed combustor (11) is superheated in a superheater (12), the temperature of the steam being between 250°C and 400°C and pressure between 40 and 200 bars.

3. Process according claim 1 or 2, wherein the combustion gases leaving the combustor (11) are neutralized in a treatment system (14) and filtered in filter (15) so as to complete their neutralization and eliminate the solids entrained, the temperature of the combustion gasses leaving the combustion plant 1 being between 200°C for commercial filters and 400°C for electrofilters or special ceramic fiber filters.

4. Process according claim 1, wherein the gaseous fuel leaving the heat exchanger (22) is quenched and scrubbed with water in reactor (23) at temperatures lower than 100°C to eliminate the residual acidity and most of the ash and pitch in a suspension (2.6) that is sent to the combustor (11) of the combustion plant (1).

5. Process according claim 4, wherein the cold gaseous fuel leaving reactor (23) is filtered in a filter (24) for residual entrained solids that are recycled to the combustor (11) of the combustion plant (1).

6. Process according to anyone of the previous claims, wherein the steam and the combustion gasses exiting the combustion plant and the clean combustion fuel are sent to the boiler (31) for adiabatic combustion between 500°-700°C to generate a superheated steam at temperatures between 450°C and 700°C and pressure approximately equal to that of the original saturated steam and preferably around 550°C to be fed to the turbine (32) for power generation.

7. Plant for the production of electrical energy from municipal solid waste (MSW) or a fraction thereof produced by selective collection, the biomass resulting from farming or fuel derived therefrom, considered as waste, comprising a combination of a combustion plant (1) and a gasification plant (2), wherein the combustion plant (1) comprises a fluidized bed (11) for combustion of the waste, of the ash and of the thermal waste generated by the gasification plant (2) for producing saturated steam between 250°C and 350°C a treatment system (14) and a filter (15) for combustion gasses;
wherein the gasification plant (2) comprises a partial waste combustor (21) for the production of lean gas at approximately 900°C, a heat exchanger (22) for cooling the lean gas to temperatures between 500°C and 250°C and recovery of hot fluids produced in the combustor (11) of the plant (1), a reactor (23) at low temperature for scrubbing the lean gas and a filter (24) for finishing the cold lean gas to give a clean gaseous fuel; and
wherein a boiler (31) is provided fed with the clean gaseous fuel produced in the gasification plant (2) and with the clean combustion gasses of the combustion plant (1) containing excess oxygen for superheating the steam produced in the combustion plant (1);
the plant further comprising a turbine (32) for the production of electrical energy and means for recycling the condensate produced by a condenser (33) of the steam turbine.

8. Plant according to claim 7, **characterized in that** said combustion plant (1) further comprises a superheater (12) for producing a superheated steam.

9. Plant according claim 7 or 8, comprising pumping means for transferring a suspension of solids (2.6) generated in the reactor (23) of the gasification plant (2) to the combustor (11) of the combustion plant (1).

## Patentansprüche

1. Kombiniertes Verfahren zur Erzeugung von elektrischer Energie durch die Verbrennung von Siedlungsabfall (MSW) oder einem durch getrennte Müllsammlung erzeugten Teil hiervon, aus landwirtschaftlicher Biomasse oder hieraus gewonnenem, als Abfall betrachtetem Kraftstoff, unter Kombination eines Verbrennungskraftwerks (1) mit einer Gasifizierungsanlage (2), wobei
- das Verbrennungskraftwerk (1) den Abfall zusammen mit der Asche und dem durch die Gasifizierungsanlage (2) erzeugten thermalen Abfall in einer Wirbelschichtbrennkammer (11) verbrennt, die Sattdampf und ein gefiltertes, sauberes Verbrennungsabgas erzeugt, das als Verbrennungsmittel in einem Dampferzeuger (31) verwendet sein soll;
- die Gasifizierungsanlage (2) in einer Abfallteilbrennkammer (21) den Abfall teilweise verbrennt und bei 900°C ein Schwachgas erzeugt, das in einem Wärmetauscher (22) auf eine Temperatur zwischen 500°C und 250°C abgekühlt und in einem Reaktor (23) gewaschen wird, wobei eine konzentrierte Feststoffsuspension entsteht, die zusammen mit der weiter aufzubereitenden Asche in das Verbrennungskraftwerk rückgeführt wird, und das kalte Schwachgas zu einem sauberen, gasförmigen Kraftstoff aufbereitet wird, um für das Überhitzen des Dampfes im kombinierten Kraftwerk verwendet zu werden;
- der aus dem Verbrennungskraftwerk ausströmende Dampf in einen Dampferzeuger (31) eingespeist wird, der den in der Gasifizierungsanlage (2) erzeugten, sauberen, gasförmigen Kraftstoff verbrennt und den Sauerstoff sowie die Abwärme des gefilterten, sauberen Abgases aus dem Verbrennungskraftwerk (1) nutzt, um überhitzten Dampf zu erzeugen, der in eine Turbine (32) zur Stromerzeugung eingespeist sein soll.

2. Verfahren nach Anspruch 1, bei dem der in der Wirbelschichtbrennkammer (11) erzeugte Sattdampf in einem Dampfüberhitzer (12) überhitzt wird, wobei die Temperatur des Dampfes zwischen 250°C und 400°C und der Druck zwischen 40 und 200 bar liegt.

3. Verfahren nach Anspruch 1 oder 2, bei dem die aus der Brennkammer (11) austretenden Verbrennungsabgase in einem Bearbeitungssystem (14) neutralisiert und in einem Filter (15) gefiltert werden, um ihre Neutralisierung zu vervollständigen und die mitgeführten Feststoffe zu beseitigen, wobei die Temperatur der aus dem Verbrennungskraftwerk 1 austretenden Verbrennungsabgase zwischen 200°C bei handelsüblichen Filtern und 400°C bei Keramikfaser-Spezialfiltern liegt.

4. Verfahren nach Anspruch 1, bei dem der aus dem Wärmetauscher (22) austretende, gasförmige Kraftstoff abgekühlt und in einem Reaktor (23) mit Wasser bei Temperaturen von weniger als 100°C gewaschen wird, um die Restsäure und einen Großteil der Asche zu beseitigen und in eine Suspension (2.6) zu geben, die in die Brennkammer (11) des Verbrennungskraftwerks (1) geleitet wird.

5. Verfahren nach Anspruch 4, bei dem der aus dem Reaktor (23) auströmende, kalte gasförmige Kraftstoff in einem Filter (24) bezüglich der mitgeführten Feststoffe gefiltert wird, die in die Brennkammer (11) des Verbrennungskraftwerks (1) rückgeführt werden.

6. Verfahren nach einem beliebigen der vorstehenden Ansprüche, bei dem der Dampf und die aus dem Verbrennungskraftwerk ausströmenden Verbrennungsabgase und der saubere Brennstoff in einen Dampferzeuger (31) geleitet werden zur adiabatischen Verbrennung bei 500°C - 700°C um überhitzten Dampf bei Temperaturen zwischen 450°C und 700°C, und einem Druck, der ungefähr dem des ursprünglichen Sattdampfes entspricht, zu erzeugen, und bevorzugt ca. 550°C, der zur Stromerzeugung in die Turbine (32) eingespeist sein soll.

7. Kraftwerk zur Erzeugung von elektrischer Energie aus Siedlungsabfall (MSW) oder einem durch getrennte Müllsammlung erzeugten Teil hiervon, aus landwirtschaftlicher Biomasse oder hieraus gewonnenem, als Abfall betrachtetem Kraftstoff, umfassend:
- eine Kombination aus einem Kraftwerk (1) und einer Gasifizierungsanlage (2), bei der das Kraftwerk (1) eine Wirbelschichtbrennkammer (11) zur Verbrennung des Abfalls, der Asche und des thermalen Abfalls umfasst, die in der Gasifizierungsanlage (2) entstehen, zur Erzeugung von Sattdampf zwischen 250°C und 350°C;
- ein Behandlungssystem (14) und einen Filter (15) für die Verbrennungsabgase;
wobei die Gasifizierungsanlage (2) eine Abfallteilbrennkammer (21) zur Erzeugung eines Schwachgases bei ca. 900°C umfasst,
- einen Wärmetauscher (22), um das Schwachgas auf Temperaturen zwischen 500°C und 250°C abzukühlen und die in der Brennkammer (11) des Kraftwerks entstehenden heißen Flüssigkeiten zurückzugewinnen,
- einen Niedertemperatur-Reaktor (23) zum Waschen des Schwachgases und
- einen Filter (24) zur Aufbereitung des kalten Schwachgases und Erzeugung eines sauberen gasförmigen Brennstoffs; und
wobei ein Dampferzeuger (31) vorgesehen ist, der mit dem in der Gasifizierungsanlage (2) erzeugten, sauberen, gasförmigen Kraftstoff und den sauberen Verbrennungsabgasen aus dem Verbrennungskraftwerk (1) gespeist wird, welche überschüssigen Sauerstoff für das Überhitzen des Dampfes enthalten, der in dem Verbrennungskraftwerk (1) erzeugt wird;
wobei das Kraftwerk ferner eine Turbine (32) zur Erzeugung von elektrischer Energie sowie Mittel zur Rückführung des Kondensats umfasst, das durch den Kondensator (33) der Dampfturbine erzeugt wird.

8. Kraftwerk nach Anspruch 7, **dadurch gekennzeichnet, dass** das Verbrennungskraftwerk (1) ferner einen Überhitzer (12) zur Erzeugung von überhitztem Dampf umfasst.

9. Kraftwerk nach Anspruch 7 oder 8, umfassend Pumpmittel zum Übertragung einer Suspension der in dem Reaktor (23) der Gasifizierungsanlage (2) erzeugten Feststoffe (2.6) in die Brennkammer (11) des Verbrennungskraftwerks (1).

## Revendications

1. Procédé combiné pour obtenir de l'énergie électrique à partir de la combustion de déchets solides municipaux (MSW) ou d'une fraction de ceux-ci produits par collecte sélective, de la biomasse provenant de l'agriculture ou de combustible dérivé de celle-ci, considéré comme déchets, avec une combinaison d'une installation de combustion (1) et d'une installation de gazéification (2), dans lequel
- l'installation de combustion (1) brûle les déchets conjointement aux cendres et aux déchets thermiques générés par l'installation de gazéification (2) dans un dispositif de combustion à lit fluidisé (11) qui produit de la vapeur saturée, un gaz de combustion propre filtré, à utiliser comme comburant dans une chaudière (31);
- l'installation de gazéification (2) brûle partiellement les déchets et produit un gaz pauvre à 900°C dans un dispositif de combustion partielle de déchets (21), qui est refroidi à une température entre 500°C et 250°C dans un échangeur de chaleur (22), épuré dans un réacteur (23) générant une suspension concentrée de solides qui est recyclée vers l'installation de combustion (1) conjointement aux cendres qui nécessitent un traitement ultérieur, et le gaz pauvre froid est fini pour donner un combustible gazeux propre à utiliser pour surchauffer la vapeur de la centrale combinée;
- la vapeur sortant de l'installation de combustion est acheminée à une chaudière (31) qui brûle le combustible gazeux propre produit par l'installation de gazéification (2) et utilise l'oxygène et la chaleur perdue du gaz propre filtré de l'installation de combustion (1) pour produire une vapeur surchauffée pour alimenter une turbine (32) pour la génération d'énergie.

2. Procédé selon la revendication 1, dans lequel la vapeur saturée qui est produite dans le dispositif de combustion à lit fluidisé (11) est surchauffée dans un surchauffeur (12), la température de la vapeur étant entre 250°C et 400°C et la pression entre 40 et 200 bars.

3. Procédé selon la revendication 1 ou 2, dans lequel les gaz de combustion quittant le dispositif de combustion (11) sont neutralisés dans un système de traitement (14) et filtrés dans un filtre (15) de manière à achever leur neutralisation et éliminer les solides entraînés, la température des gaz de combustion quittant l'installation de combustion 1 étant entre 200°C pour des filtres du commerce et 400°C pour des électro-filtres ou des filtres spéciaux en fibres de céramique.

4. Procédé selon la revendication 1, dans lequel le combustible gazeux quittant l'échangeur de chaleur (22) est refroidi et épuré avec de l'eau dans le réacteur (23) à des températures inférieures à 100°C pour éliminer l'acidité résiduelle et la plupart des cendres et du brai dans une suspension (2.6) qui est envoyée au dispositif de combustion (11) de l'installation de combustion (1).

5. Procédé selon la revendication 4, dans lequel le combustible gazeux froid quittant le réacteur (23) est filtré dans un filtre (24) pour des solides entraînés résiduels qui sont recyclés dans le dispositif de combustion (11) de l'installation de combustion (1).

6. Procédé selon l'une quelconque des revendications précédentes, dans lequel la vapeur et les gaz de combustion sortant de l'installation de combustion et le combustible de combustion propre sont envoyés à la chaudière (31) pour une combustion adiabatique entre 500°C et 700°C pour générer une vapeur surchauffée à des températures entre 450°C et 700°C et une pression approximativement égale à celle de la vapeur saturée d'origine et de préférence autour de 550°C pour être alimentée dans la turbine (32) pour la génération d'énergie.

7. Centrale pour la production d'énergie électrique à partir de déchets solides municipaux (MSW) ou d'une fraction de ceux-ci produits par collecte sélective, de la biomasse provenant de l'agriculture ou de combustible dérivé de celle-ci, considéré comme déchets, comprenant une combinaison d'une installation de combustion (1) et d'une installation de gazéification (2),
dans laquelle l'installation de combustion (1) comprend un lit fluidisé (11) pour la combustion des déchets, des cendres et des déchets thermiques générés par l'installation de gazéification (2) pour produire de la vapeur saturée entre 250°C et 350°C, un système de traitement (14) et un filtre (15) pour les gaz de combustions;
dans laquelle l'installation de gazéification (2) comprend un dispositif de combustion partielle de déchets (21) pour la production d'un gaz pauvre à environ 900°C, un échangeur de chaleur (22) pour refroidir le gaz pauvre à des températures entre 500°C et 250°C et récupérer des fluides chauds produits par le dispositif de combustion (11) de l'installation (1), un réacteur (23) à basse température pour épurer le gaz pauvre et un filtre (24) pour finir le gaz pauvre froid pour fournir un combustible gazeux propre; et
dans laquelle une chaudière (31) est pourvue, qui est alimentée avec le combustible gazeux propre produit dans l'installation de gazéification (2) et avec les gaz de combustion propres de l'installation de combustion (1) contenant de l'oxygène en excès pour surchauffer la vapeur produite par l'installation (1);
la centrale comprenant en outre une turbine (32) pour la génération d'énergie électrique et des moyens pour recycler le condensat produit par un condenseur (33) de la turbine à vapeur (32).

8. Centrale selon la revendication 7, **caractérisée en ce que** ladite installation de combustion (1) comprend en outre un surchauffeur (12) pour produire une vapeur surchauffée.

9. Centrale selon la revendication 7 ou 8, comprenant des moyens de pompage pour transférer une suspension de solides (2.6) générée dans le réacteur (23) de l'installation de gazéification (2) au dispositif de combustion (11) de l'installation de combustion (1).
